Europäisches Patentamt

European Patent Office

Office européen des brevets

(19)

(11) **EP 0 789 739 B1**

(12) **FASCICULE DE BREVET EUROPEEN**

(45) Date de publication et mention
de la délivrance du brevet:
**30.01.2002 Bulletin 2002/05**

(21) Numéro de dépôt: **96930218.1**

(22) Date de dépôt: **05.09.1996**

(51) Int Cl.7: **C10G 45/64**, B01J 29/70

(86) Numéro de dépôt international:
**PCT/FR96/01364**

(87) Numéro de publication internationale:
**WO 97/09397 (13.03.1997 Gazette 1997/12)**

(54) **PROCEDE D'HYDROISOMERISATION SELECTIVE DE PARAFFINES LONGUES LINEAIRES ET/OU PEU RAMIFIEES AVEC UN CATALYSEUR A BASE DE TAMIS MOLECULAIRE**

VERFAHREN ZUR SELEKTIVEN HYDROISOMERIERUNG VON LANGEN LINEAREN UND/ODER WENIG VERZWEIGTEN PARAFFINEN MIT EINEM AUF EINEN MOLEKULARSIEB BASIERTEN KATALYSATOR

SELECTIVE HYDROISOMERISATION METHOD FOR STRAIGHT AND/OR SLIGHTLY BRANCHED LONG PARAFFINS, USING A MOLECULAR SIEVE CATALYST

(84) Etats contractants désignés:
**BE DE ES FR GB IT NL**

(30) Priorité: **06.09.1995 FR 9510424**
**06.09.1995 FR 9510425**

(43) Date de publication de la demande:
**20.08.1997 Bulletin 1997/34**

(73) Titulaire: **INSTITUT FRANCAIS DU PETROLE**
**92506 Rueil-Malmaison Cédex (FR)**

(72) Inventeurs:
• **MARTENS, Johan**
**B-3040 Huldenberg (BE)**
• **SOUVERIJNS, Wim**
**B-2320 Hoogstraten (BE)**
• **PARTON, Rudy**
**B-3020 Winksele (BE)**
• **FROMENT, Gilbert**
**B-9831 Deurle (BE)**

• **MARCILLY, Christian**
**F-78800 Houilles (FR)**
• **BENAZZI, Eric**
**F-78360 Montesson (FR)**
• **GEORGE-MARCHAL, Nathalie**
**F-75005 Paris (FR)**

(74) Mandataire: **Andreeff, François**
**INSTITUT FRANCAIS DU PETROLE 4, avenue de Bois-Préau**
**92506 Rueil-Malmaison Cédex (FR)**

(56) Documents cités:
**EP-A- 0 065 400         EP-A- 0 103 981**
**EP-A- 0 187 497         WO-A-92/01657**
**US-A- 4 814 543**

Remarques:
Le dossier contient des informations techniques présentées postérieurement au dépôt de la demande et ne figurant pas dans le présent fascicule.

EP 0 789 739 B1

## Description

La présente invention concerne un procédé d'hydroisomérisation sélective de paraffines, linéaires et/ou peu ramifiées, longues (plus de 10 atomes de carbone), en particulier pour convertir, avec un bon rendement, des charges possédant des points d'écoulement élevés en au moins une coupe présentant un point d'écoulement bas et un haut indice de viscosité.

## Art antérieur

Les lubrifiants de haute qualité sont d'une importance primordiale pour le bon fonctionnement des machines modernes, des automobiles, et des camions. Cependant, la quantité de paraffines issues directement du pétrole, non traitées, et possédant les propriétés adéquates pour constituer des bons lubrifiants est très faible par rapport à la demande croissante dans ce secteur.

Le traitement des fractions pétrolières lourdes à fortes teneurs en paraffines linéaires ou peu ramifiées est nécessaire afin d'obtenir des huiles de base de bonne qualité et ce avec les meilleurs rendements possibles, par une opération de déparaffinage qui vise à éliminer les paraffines linéaires ou très peu branchées, des charges qui seront ensuite utilisées en tant que huiles de base ou en tant que kérosène ou carburéacteur (jet fuel).

En effet, les paraffines de haut poids moléculaire qui sont linéaires ou très faiblement branchées et qui sont présentes dans les huiles ou dans le kérosène ou carburéacteur conduisent à des points d'écoulement hauts et donc à des phénomènes de figeage pour des utilisations à basse température. Afin de diminuer les valeurs des points d'écoulement, ces paraffines linéaires pas ou très peu branchées doivent être entièrement ou partiellement éliminées.

Cette opération de déparaffinage peut s'effectuer par extraction par des solvants tels que le propane ou la méthyl-éthyl cétone, on parle alors de déparaffinage au propane ou à la méthyl éthyl-cétone (MEK). Cependant, ces techniques sont coûteuses, longues et pas toujours aisées à mettre en oeuvre.

Le déparaffinage catalytique ainsi dénommé par opposition au déparaffinage par solvant est plus économique et permet d'obtenir des produits possédant les propriétés physico-chimiques désirées. Ceci est obtenu par un craquage sélectif des chaînes paraffiniques linéaires les plus longues qui conduit à la formation de composés de poids moléculaire plus faible dont une partie peut être éliminée par distillation.

Compte tenu de leur sélectivité de forme les zéolithes sont parmi les catalyseurs de déparaffinage les plus utilisés. L'idée qui prévaut à leur utilisation est qu'il existe des structures zéolithiques dont les ouvertures de pores sont telles qu'elles permettent l'entrée dans leur microporosité des paraffines linéaires longues ou 'très peu branchées mais en excluent les paraffines ramifiées, les napthènes et les aromatiques. Ce phénomène conduit ainsi à un craquage sélectif des paraffines linéaires ou très peu branchées.

Des catalyseurs à base de zéolithes ayant des tailles de pores intermédiaires telles que les ZSM-5, ZSM-11, ZSM-12, ZSM-22, ZSM-23, ZSM-35 et ZSM-38 ont été décrits pour leur utilisation dans les procédés de déparaffinage catalytique par craquage.

Les procédés utilisant ces zéolithes permettent le déparaffinage par craquage de charges contenant des quantités de paraffines linéaires ou très peu branchées inférieures à 50% poids. Cependant, pour des charges contenant des quantités supérieures de ces composés il est apparu que leur craquage conduit à la formation de quantités importantes de produits de poids moléculaires plus faibles, tels que du butane, propane, éthane et méthane, ce qui réduit considérablement le rendement en produits recherchés.

Pour pallier à ces inconvénients, la demanderesse a porté ses efforts de recherche sur la mise au point de catalyseurs (de préférence non ZSM) permettant une isomérisation de ces composés.

De nombreux brevets existent dans ce domaine par exemple, le brevet WO 92/01657 décrit et revendique un procédé de déparaffinage de charges avec réaction d'isomérisation en présence d'un métal du groupe VIII, d'une pression d'hydrogène comprise entre 100 KPa et 21000 KPa et d'un catalyseur dont l'ouverture de pores est comprise entre 0,48 nm et 0,71 nm et dont la taille des cristallites est inférieure à 0,5 μm. Ce catalyseur conduit à des performances améliorées en termes de rendement par rapport aux catalyseurs de l'art antérieur.

## Objet de l'invention

L'invention a pour objet un procédé d'hydroisomérisation sélective de composés ayant au moins une chaîne n-alcane de plus de 10 atomes de carbone, dans lequel ledit composé à traiter est mis au contact d'un catalyseur comprenant au moins un élément hydro-déshydrogénant et au moins un tamis moléculaire ayant un réseau poreux mono ou bidimensionnel, dont les ouvertures de pores accessibles sont délimitées par 10 atomes d'oxygène, et la distance dite largeur de pont entre lesdits pores étant inférieure à 0,70 nm, ledit tamis contenant dans le réseau zéolitique des atomes de bore, fer, gallium et/ou zinc) et ledit catalyseur soumis au test standard d'isomérisation du n-heptadécane présente, pour une conversion de 95%, une sélectivité en produits isomérisés d'au moins 70%.

Avantageusement ce procédé permet de convertir une charge possédant un haut point d'écoulement en un mélange possédant un point d'écoulement plus bas et un haut indice de viscosité.

La charge comprend, entre autre, des paraffines linéaires et/ou peu ramifiées comportant au moins 10 atomes de carbone, de préférence de 15 à 50 atomes de carbone et avantageusement de 15 à 40 atomes de carbone.

Le procédé comprend l'utilisation d'un catalyseur comportant au moins un tamis moléculaire possédant au moins un type de pores dont l'ouverture est délimitée par 10 atomes d'oxygène et qui sont les pores accessibles de l'extérieur les plus grands présents dans la structure. Le réseau poreux de la zéolithe est mono ou bidimensionnel, et de préférence monodimensionnel.

La largeur de pont entre deux ouvertures de pores (à 10 atomes d'oxygène). telle que définie précédemment, est inférieure à 0,70 nm (1nm =10$^{-9}$ m) de préférence comprise entre 0,50 nm et 0,68 nm, de manière encore plus préférée entre 0,52 nm et 0,65 nm. De préférence, les tailles de cristallites sont inférieures à 2 $\mu$m (1$\mu$m = 10$^{-6}$ m), avantageusement inférieure à 1$\mu$m et de préférence à 0,4 $\mu$m.

Le catalyseur est en outre caractérisé en ce que pour une conversion de l'ordre de 95 % en poids de n-heptadécane (n-C17) il conduit à une sélectivité en produits isomérisés supérieure ou égale à 70% et de préférence d'au moins 80%, dans les conditions d'un test standard d'isomérisation du n-C17 (TSI) qui seront définies ci-après. Les produits isomérisés contiennent généralement entre environ 65 et 80% pds de produits monobranchés et entre environ 20 et 35 % pds de produits multibranchés, essentiellement des dibranchés. On entend par produits monobranchés des paraffines linéaires comportant un seul groupe méthyl, et par produits bibranchés des paraffines linéaires comportant 2 groupes méthyles qui ne sont pas portés sur le même atome de carbone. Par extension on définit ainsi les multibranchés. L'hydroisomérisation est ainsi sélective.

D'autre part le catalyseur comporte au moins une fonction hydro-déshydrogénante, par exemple un métal du groupe VIII et/ou un métal du groupe VI B, et/ou le rhénium et/ou le niobium, et la réaction est réalisée dans les conditions décrites ci-après.

La demanderesse a en effet découvert de façon surprenante que l'un des facteurs déterminant pour l'obtention de fortes sélectivités en produits isomérisés est l'utilisation de tamis moléculaires caractérisé en ce que

- l'ouverture des pores les plus grands est délimitée par 10 atomes d'oxygène,
- la largeur de pont doit être inférieure à 0,70 nm, de préférence comprise entre 0,50 nm et 0,68 nm, de manière préférée entre 0,52 nm et 0,65 nm.

Ce dernier point en particulier est en contradiction avec ce qui est revendiqué dans les brevets précédemment cités dans l'art antérieur tel que WO 92/01657 qui donne comme moyen essentiel une gamme de taille de pores pour l'obtention de bons rendements en produits isomérisés.

La mesure de largeur de pont est réalisée en utilisant un outil de graphisme et de modélisation moléculaire tel que Hyperchem ou Biosym, qui permettent de construire la surface des tamis moléculaires en question et, en tenant compte des rayons ioniques des éléments présents dans la charpente du tamis, de mesurer la largeur de pont.

L'utilisation de tels tamis moléculaires selon l'invention dans les conditions décrites ci-dessus permet, notamment, la production de produits à faible point d'écoulement et haut indice de viscosité avec de bons rendements.

## Description détaillée de l'invention

Les tamis moléculaires selon l'invention qui peuvent être utilisés pour les réactions d'isomérisation des hydrocarbures paraffiniques linéaires ou peu branchés sont des zéolithes, aluminosilicates cristallisés tels que Theta-1, NU-10, NU-23, EU-13, dont le rapport Si/Al est celui qui convient le mieux pour l'application désirée. Parmi les zéolithes selon l'invention figurent aussi la zéolithe NU-87 qui possède certes des pores délimités par 10 et 12 atomes d'oxygène mais dont l'accessibilité à ces derniers se fait par les ouvertures de pores à 10 atomes d'oxygène.

La zéolithe NU-10 employée dans le procédé selon l'invention ainsi que son mode de synthèse sont décrits dans le brevet EP-A-77624. Cette zéolithe NU-10 est caractérisée par un tableau de diffraction des rayons X qui est le suivant :

| Tableau de diffraction des rayons X de la zéolithe NU-10 | |
|---|---|
| d(A) | I/Io |
| 10,95 ± 0,25 | m à F |
| 8,80 ± 0,14 | f à m |
| 6,99 ± 0,14 | f à m |

(suite)

| Tableau de diffraction des rayons X de la zéolithe NU-10 | |
|---|---|
| d(A) | I/Io |
| 5,41 ± 0,10 | f |
| 4,57 ± 0,09 | f |
| 4,38 ± 0,08 | TF |
| 3,69 ± 0,07 | TF |
| 3,63 ± 0,07 | TF |
| 3,48 ± 0,06 | m à F |
| 3,36 ± 0,06 | f |
| 3,31 ± 0,05 | f |
| 2,78 ± 0,05 | f |
| 2,53 ± 0,04 | m |
| 2,44 ± 0,04 | f |
| 2,37 ± 0,03 | f |
| 1,88 ± 0,02 | f |
| f = faible (I/Io compris entre 0 et 20, m=moyen (I/Io compris entre 20 et 40), F=Fort (I/Io compris entre 40 et 60), TF=Trés Fort (I/Io compris entre 60 et 100).  La zéolite Nu-10 présente un rapport atomique Si/Al compris entre 8 et 1000. | |

On a pu observer que, les catalyseurs utilisés dans le procédé selon l'invention sont caractérisés par un test catalytique dit test standard d'isomérisation (TSI) du n-heptadécane pur qui est réalisé sous une pression partielle de 150 kPa d'hydrogène et une pression partielle de n-C17 de 0,5 kPa soit une pression totale de 150,5 kPa en lit fixe et avec un débit de n-C17 constant de 15,4 ml/h et une masse de catalyseur de 0,5 g. La réaction est réalisée en flux descendant. Le taux de conversion est réglé par la température à laquelle se déroule la réaction. Le catalyseur soumis au dit test est constitué de zéolithe pure pastillée et de 0,5% poids de platine.

Le tamis contient généralement au moins un élément hydro-déshydrogénant, par exemple au moins un métal du groupe VIII, de préférence au moins métal choisi dans le groupe formé par le Pt ou le Pd, qui est introduit dans le tamis moléculaire par exemple par imprégnation à sec, par échange ionique ou toute autre méthode connue de l'homme du métier.

La teneur en métal (métaux) hydro-déshydrogénant(s) ainsi introduit, exprimée en % poids par rapport à la masse de tamis moléculaire engagée, est généralement inférieure à 5% (0,01-5%), de préférence inférieure à 1% (0,01-1%) et généralement de l'ordre de 0,5% poids. Dans ces conditions un tamis moléculaire selon l'invention doit conduire, pour un taux de conversion du n-C17 de l'ordre de 95% poids (le taux de conversion est réglé par la température), à une sélectivité en produits isomérisés supérieure ou égale à 70% poids et de préférence d'au moins 80% poids.

La sélectivité en isomérisation du test standard d'isomérisation du n-C17 ($TSI_{n-C17}$) est définie comme suit :

$$\text{Sélectivité isomérisation (\%)} = \frac{\text{masse de produits isomérisés C}_{17}\text{ (monobranchés + multibranchés) dans la recette}}{\text{masse de produits isomérisés en C}_{17}\text{ dans la recette + masse de produits C}_{17}\text{- dans la recette}} \times 100$$

à une conversion du n-C17 de l'ordre de 95%.

Les produits en $C_{17}$- sont les composés qui possèdent moins de 17 atomes de carbone, quelque soit leur degré de ramification.

Dans le cas du traitement d'une charge réelle, le tamis moléculaire selon l'invention est préalablement mis en forme. Selon une première variante, le tamis moléculaire peut être soumis au dépôt d'au moins un métal du groupe VIII de préférence choisi dans le groupe formé par le platine et le palladium, et mis en forme par toute technique connue de l'homme du métier. Il peut en particulier être mélangé à une matrice, généralement amorphe, par exemple à une poudre humide de gel d'alumine. Le mélange est ensuite mis en forme, par exemple par extrusion au travers d'une filière. La teneur en tamis moléculaire du mélange ainsi obtenu est généralement comprise entre 0,5 et 99,9% et avantageusement comprise entre 10 et 90% en poids par rapport au mélange (tamis moléculaire + matrice), et de préférence entre 20-70%.

Dans la suite du texte on désignera par le terme support le mélange tamis moléculaire + matrice.

La mise en forme peut être réalisée avec d'autres matrices que l'alumine, telles que par exemple la magnésie, les silice-alumines amorphes, les argiles naturelles (kaolin, bentonite, sepiolite, attapulgite) et par d'autres techniques que l'extrusion, telles que le pastillage ou la dragéification.

La métal hydrogénant du groupe VIII, de préférence Pt et /ou Pd, peut également être déposé sur le support par tout procédé connu de l'homme de l'art et permettant le dépôt du métal sur le tamis moléculaire. On peut utiliser la technique d'échange cationique avec compétition où le compétiteur est de préférence le nitrate d'ammonium, le rapport de compétition étant au moins égal à environ 20 et avantageusement d'environ 30 à 200. Dans le cas du platine ou du palladium, on utilise habituellement un complexe tétramine du platine ou un complexe tétramine du palladium : ces derniers se déposeront alors pratiquement en totalité sur le tamis moléculaire. Cette technique d'échange cationique peut également être utilisée pour déposer directement le métal sur la poudre de tamis moléculaire, avant son mélange éventuel avec une matrice.

Le dépôt du métal (ou des métaux) du groupe VIII est suivi en général d'une calcination sous air ou oxygène, usuellement entre 300 et 600°C durant 0,5 à 10 heures, de préférence entre 350°C et 550°C durant 1 à 4 heures. On peut procéder ensuite à une réduction sous hydrogène, généralement à une température comprise entre 300 et 600°C pendant 1 à 10 heures ; de préférence on opérera entre 350° et 550°C pendant 2 à 5 heures.

On peut également déposer le platine et/ou le palladium non plus directement sur le tamis moléculaire, mais sur le liant aluminique, avant ou après l'étape de mise en forme, en mettant en oeuvre un échange anionique avec de l'acide hexachloroplatinique, de l'acide hexachloropalladique et/ou du chlorure de palladium en présence d'un agent compétiteur, par exemple l'acide chlorhydrique. En général après le dépôt de platine et/ou de palladium, le catalyseur est comme précédemment soumis à une calcination puis réduit sous hydrogène comme indiqué ci-dessus.

Les charges qui peuvent être traitées selon le procédé selon l'invention sont avantageusement des fractions possédant des points d'écoulement relativement hauts dont on désire diminuer la valeur.

Le procédé selon l'invention peut être utilisé pour traiter des charges variées allant de fractions relativement légères telles que les kérosènes et carburéacteurs jusqu'à des charges possédant des points d'ébullition plus élevés telles que les distillats moyens, les résidus sous vide, les gazoles, les distillats moyens issus du FCC (LCO et HCO) et les résidus d'hydrocraquage.

La charge à traiter est dans la majeur partie des cas une coupe C10+ de point d'ébullition initial supérieur à environ 175°C, ou une coupe C20+ à point d'ébullition initial supérieur à 315°C, et de préférence une coupe lourde à point d'ébullition initial d'au moins 380°C. Le procédé selon l'invention est particulièrement adapté pour traiter des distillats paraffiniques tels que les distillats moyens qui englobent les gazoles, les kérosènes, les carburéacteurs et toutes autres fractions dont le point d'écoulement et la viscosité doivent être adaptés pour rentrer dans le cadre des spécifications

Les charges qui peuvent être traitées selon le procédé de l'invention peuvent contenir des paraffines, des oléfines, des naphtènes, des aromatiques et aussi des hétérocycles et avec une proportion importante de n-paraffines de haut poids moléculaire et de paraffines très peu branchées également de haut poids moléculaire.

La réaction peut être conduite de façon à ce que le taux des réactions de craquage reste suffisamment faible pour rendre le procédé économiquement viable. Le taux des réactions de craquage est généralement inférieur à 20% pds.

Des charges typiques qui peuvent être traitées avantageusement selon l'invention possèdent en général un point d'écoulement au dessus de 0°C et plus couramment au-dessus de 15°C. Les produits résultant du traitement selon le procédé ont des points d'écoulement inférieurs à 0°C et de préférence inférieurs à environ -10°C.

Ces charges possèdent des teneurs en n-paraffines, (n-alcanes) à plus de 10 atomes de carbone, de haut poids moléculaire et de paraffines, à plus de 10 atomes de carbone, très peu branchées également de haut poids moléculaire, supérieures à 30% et jusqu'à environ 90%, voire dans certains cas supérieures à 90% poids. Le procédé est particulièrement intéressant lorsque cette proportion est d'au moins 60% poids.

On peut citer comme exemples d'autres charges traitables selon l'invention et à titre non limitatifs, les bases pour huiles lubrifiantes, les paraffines de synthèse issues du procédé Fischer-Tropsch, les polyalphaoléfines à haut point d'écoulement, les huiles de synthèse etc... Le procédé peut également s'appliquer à d'autres composés contenant une chaîne n-alcane tels que définis précédemment, par exemple des composés n-alkylcycloalcanes, ou comportant au moins un groupe aromatique.

Les conditions opératoires dans lesquelles s'opère l'hydroisomérisation selon le procédé de l'invention sont les suivantes:

- la température de réaction est comprise entre 170 et 500°C et de préférence entre 180 et 450°C, avantageusement 180-400°C.
- la pression est comprise entre 1 et 250 bar et de préférence entre 10 et 200 bar,
- la vitesse volumique horaire (wh exprimée en volume de charge injectée par unité de volume de catalyseur et par heure) est comprise entre environ 0,05 et environ 100 et de préférence entre environ 0.1 et environ 30 h-1.

Le contact entre la charge et le catalyseur est réalisé en présence d'hydrogène. Le taux d'hydrogène utilisé et exprimé en litre d'hydrogène par litre de charge est compris entre 50 et environ 2000 litres d'hydrogène par litre de charge et de préférence entre 100 et 1500 litres d'hydrogène par litre de charge.

La charge à traiter possède de préférence une teneur en composés azotés inférieure à environ 200 ppm poids et de préférence inférieure à 100 ppm poids. La teneur en soufre est inférieure à 1000 ppm poids, de préférence inférieure à 500 ppm et de manière encore plus préférée inférieure à 200 ppm poids. La teneur en métaux de la charge, tels que Ni ou V, est extrêmement réduite, c'est à dire inférieure à 50 ppm poids, de manière préférée inférieure à 10 ppm poids et de manière encore plus préférée inférieure à 2 ppm poids.

Les composés obtenus par ledit procédé selon l'invention sont essentiellement monobranchés, dibranchés et multibranchés avec des groupes méthyles. Par exemple, dans le cas d'une charge constituée de n-heptadécane pur (n-C17), on a obtenu de façon sélective des composés méthylhexadécane, majoritairement le 2-méthylhexadécane, ainsi que les composés dibranchés 2,7-; 2,8-; 2,9; 2,10- et 2,11- diméthylpentadécane. L'ensemble des produits isomérisés représente plus de 70% poids des produits obtenus à une conversion de 95% poids. On observe que les atomes de carbone isomérisés sont séparés d'une distance au moins égale à la largeur de pont.

Les exemples qui suivent illustrent l'invention sans toutefois en limiter la portée. Ils sont donnés pour une charge constituée de n-heptadécane (test standard d'isomérisation, TSI) ou un résidu d'hydrocraquage.

**Exemple 1: Catalyseur C1 conforme à l'invention**

La matière première utilisée est une zéolithe NU-10 sous forme H, qui possède un rapport Si/Al global d'environ 30, une ouverture de pores délimitée par 10 atomes d'oxygène et une largeur de pont, c'est à dire une distance entre deux ouvertures de pores de 0,55 nm. Les cristallites de la zéolithe NU-10 se présentent sous forme d'aiguilles dont la longueur est inférieur à 1 μm et la section est comprise entre 0,1 et 0,4 μm.

La zéolithe NU-10 est ensuite imprégnée à sec avec une solution de [Pt(NH3)4]Cl2 de manière à obtenir après une étape de calcination et de réduction à 450°C une teneur en Pt de 0,5% poids de platine sur la zéolithe.

Puis, 0,5 g de cette zéolithe chargée en platine, pastillés (fraction granulométrique 200 à 300 μm), sont introduits dans un réacteur à lit fixe.

Le test standard d'isomérisation (TSI) du n-heptadécane est alors réalisé sous une pression partielle de 150 kPa d'hydrogène et une pression partielle de n-C17 de 0,5 kPa soit une pression totale de 150,5 kPa en lit fixe et avec un débit de n-C17 constant de 15,4 ml/h et une masse de catalyseur de 0,5 g en flux descendant. Le taux de conversion est donc réglé par la température à laquelle se déroule la réaction.

La température nécessaire dans cet exemple pour atteindre 95% poids de conversion du n-C17 est de 190°C. A cette température la sélectivité en produits isomérisés est de 93% poids. Cette dernière est définie comme suit :

$$\text{Sélectivité isomérisation (\%)} = \frac{\text{masse de produits isomérisés C}_{17} \text{ (monobranchés + multibranchés) dans la recette}}{\text{masse de produits isoméfisés en C}_{17} \text{ dans la recette + masse de produits C}_{17}\text{- dans la recette}} \times 100$$

La sélectivité en monobranchés est de 67,4% et multibranchés 25,6%.

**Exemple 2: Catalyseur C2 non conforme à l'invention**

La matière première utilisée est une zéolithe USY sous forme H, qui possède un rapport Si/Al global d'environ 5, une ouverture de pores délimitée par 12 atomes d'oxygène et une largeur de pont, c'est à dire une distance entre deux ouvertures de pores, supérieure à 0,7 nm.

La zéolithe USY-H est ensuite imprégnée à sec avec une solution de [Pt(NH3)4]Cl2 de manière à obtenir, après les étapes de calcination et de réduction à 450°C, une teneur en Pt de 0,5% poids de platine sur la zéolithe.

Puis, 0,5 g de cette zéolithe chargée en platine, pastillés (fraction granulométrique 200 à 300 μm), sont introduits dans un réacteur à lit fixe.

Le test standard d'isomérisation (TSI) du n-heptadécane est alors réalisé sous une pression partielle de 150 kPa d'hydrogène et une pression partielle de n-C17 de 0,5 KPa soit une pression totale de 150,5 kPa en lit fixe et avec un débit de n-C17 constant de 15,4 ml/h et une masse de catalyseur de 0,5 g en flux descendant. Le taux de conversion est donc réglé par la température à laquelle se déroule la réaction.

La température nécessaire dans cet exemple pour atteindre 95% de conversion du n-C17 est de 220°C. A cette température la sélectivité en produits isomérisés n'est, dans ce cas, que de 16 %. Cette dernière est définie comme dans l'exemple 1.

Ce test standard d'isomérisation est donc un moyen permettant de sélectionner les catalyseurs.

## Example 3 : conforme à l'invention

La zéolithe utilisée dans cet exemple est la même zéolithe NU-10 que celle utilisée dans l'exemple 1.

La zéolithe est malaxée avec de l'alumine de type SB3 fournie par la société Condéa. La pâte malaxée est ensuite extrudée à travers une filière de diamètre 1,2 mm. Les extrudés sont ensuite calcinés à 500°C durant 2 heures sous air puis imprégnés à sec par une solution de chlorure de platine tétramine [Pt(NH3)4]Cl2, et enfin calcinés sous air à 550°C. La teneur en platine du catalyseur final C3 ainsi obtenu est de 0,7% poids et la teneur en zéolithe exprimée par rapport à l'ensemble de la masse du catalyseur est de 60% poids.

Evaluation du catalyseur C3 en hydroisomérisation d'un résidu d'hydrocraquage issu d'un distillat sous vide.

Les caractéristiques de cette charge sont les suivantes :

| | |
|---|---|
| Teneur en soufre (ppm poids) | 12 |
| Teneur en azote (ppm poids) | 2 |
| Point d'écoulement (°C) | +30 |
| Point initial | 104 |
| 5% | 325 |
| 10% | 385 |
| 50% | 452 |
| 90% | 520 |
| 95% | 536 |
| Point final | 573 |

Le catalyseur dont la préparation est décrite est ensuite utilisé pour préparer une huile de base par hydroisomérisation de la charge décrite ci-dessus.

Le catalyseur est préalablement réduit sous hydrogène à 450°C avant le test catalytique in situ dans le réacteur. Cette réduction s'effectue par paliers. Elle consiste en un palier à 150°C de 2 heures, puis une montée en température jusqu'à 450°C à la vitesse de 1°C/min, puis un palier de 2 heures à 450°C. Durant ce protocole de réduction, le débit d'hydrogène est de 1000 litres de H2 par litre de catalyseur.

La réaction a lieu à 300°C, sous une pression totale de 12 MPa, une vitesse volumique horaire 0,9h-1 et un débit d'hydrogène de 1000l H2 par litre de charge. Dans ces conditions opératoires la conversion nette en 400- est de 65% et le rendement en huile de base est de 86%.

Les caractéristiques de l'huile après hydroisomérisation sont reportées dans le tableau ci-après.

| | |
|---|---|
| Indice de viscosité VI | 136 |
| Point d'écoulement | -18 |
| Rendement Huile/charge (% poids) | 86 |

Cet exemple montre tout l'intérêt qu'il y a à utiliser un catalyseur selon l'invention, qui permet d'abaisser le point d'écoulement de la charge initiale, dans ce cas un résidu d'hydrocraquage, tout en conservant un haut indice de viscosité (VI).

La présente invention a été illustrée dans le but d'obtenir une huile, mais d'autres objectifs peuvent être atteints. Généralement, l'invention sera employée pour obtenir des branchements multiples et localisés.

**EP 0 789 739 B1**

**Revendications**

1. Procédé d'hydroisomérisation sélective de composés ayant au moins une chaîne n-alcane de plus de 10 atomes de carbone, dans lequel ledit composé à traiter est mis au contact d'un catalyseur comprenant au moins un élément hydro-déshydrogénant et au moins un tamis moléculaire ayant un réseau poreux mono ou bidimensionnel, dont les ouvertures de pores accessibles sont délimitées par 10 atomes d'oxygène, et la distance dite largeur de pont entre lesdits pores étant inférieure à 0,70 nm, ledit tamis contenant dans le réseau zéolitique des atomes de bore, fer, gallium, et/ou zinc et ledit catalyseur soumis au test standard d'isomérisation du n-heptadécane présente, pour une conversion de 95%, une sélectivité en produits isomérisés d'au moins 70%.

2. Procédé selon la revendication précédente, dans lequel la distance de pont est comprise entre 0,50 et 0,68 nm.

3. Procédé selon l'une des revendications précédentes, dans lequel la distance de pont est comprise entre 0,52 et 0,65 nm.

4. Procédé selon l'une des revendications précédentes, dans lequel le tamis moléculaire présente une taille de cristallite inférieure à 2 μm.

5. Procédé selon l'une des revendications précédentes, dans lequel le tamis moléculaire présente une taille de cristallite inférieure à 1 μm.

6. Procédé selon l'une des revendications précédentes, dans lequel le tamis moléculaire présente une taille de cristallite inférieure à 0,4 μm.

7. Procédé selon l'une des revendications précédentes, dans lequel le tamis moléculaire est NU-10.

8. Procédé selon l'une des revendications 1 à 6, dans lequel le tamis moléculaire est NU-23.

9. Procédé selon l'une des revendications 1 à 6, dans lequel le tamis moléculaire est NU-87.

10. Procédé selon l'une des revendications 1 à 6, dans lequel le tamis moléculaire est Théta-1.

11. Procédé selon l'une des revendications 1 à 6, dans lequel le tamis moléculaire est EU-13.

12. Procédé selon l'une des revendications précédentes, dans lequel l'élément hydro-déshydrogénant est choisi dans le groupe formé par les métaux du groupe VIII, les métaux du groupe VI B, le rhénium et le niobium.

13. Procédé selon l'une des revendications précédentes, dans lequel le catalyseur contient une matrice, et 0,5-99,9% pds de tamis moléculaire (par rapport au mélange matrice et tamis) et moins de 5% pds de métal (métaux) hydro-déshydrogénant(s) (par rapport au tamis).

14. Procédé selon la revendication 13, dans lequel le catalyseur contient 10-90% pds de tamis (par rapport au mélange matrice et tamis).

15. Procédé selon l'une des revendications précédentes, dans lequel la pression est comprise entre 1 et 250 bars, la température entre 170 et 500°C, la vitesse volumique horaire entre 0,05 et 100 h$^{-1}$, et le taux d'hydrogène entre 50 et 2000 l d'hydrogène/l de charge.

16. Procédé selon la revendication 15, dans lequel la température est comprise entre 180-450°C.

17. Procédé selon l'une des revendications 15 ou 16, dans lequel la pression est comprise entre 10-200 bars.

18. Procédé selon l'une des revendications 15 à 17, dans lequel le taux d'hydrogène est entre 100-1500 l d'hydrogène /l de charge.

19. Procédé selon l'une des revendications précédentes, dans lequel le composé à traiter est choisi dans le groupe formé par les n-alcanes, les n-alkylcycloalcanes et les composés comportant au moins un groupe aromatique.

8

**20.** Procédé selon l'une des revendications précédentes, dans lequel le composé à traiter est présent dans une charge à point d'ébullition initial supérieur à 175°C.

**21.** Procédé selon l'une des revendications précédentes, dans lequel le composé à traiter est présent dans une charge à point d'ébullition initial d'au moins 380°C.

**22.** Procédé selon l'une des revendications précédentes, dans lequel le composé à traiter comprend une chaîne n-alcane ayant de 15 à 50 atomes de carbone.

**23.** Procédé selon l'une des revendications précédentes, dans lequel le composé à traiter comprend une chaîne n-alcane ayant de 15 à 40 atomes de carbone.

**24.** Procédé selon l'une des revendications précédentes, dans lequel le composé à traiter est présent dans une charge hydrocarbonée choisie dans le groupe formé par les distillats moyens, les résidus sous vide, les résidus d'hydrocraquage, les paraffines issues du procédé Fischer-Tropsch, les huiles de synthèse, les coupes gasoils ,les distillats moyens issues du FCC, les bases pour huiles, les polyalphaoléfines.

**Claims**

**1.** A process for the selective hydroisomerisation of compounds containing at least one n-alkane chain containing more than 10 carbon atoms, in which said compound to be treated is brought into contact with a catalyst comprising at least one hydro-dehydrogenating element and at least one molecular sieve with a mono- or bidimensional pore network in which the openings of the accessible pores are delimited by 10 oxygen atoms, and the distance termed the bridge width between the pores is less than 0.70 nm, said molecular sieve containing boron, iron, gallium and/or zinc atoms in the zeolitic framework and in which said catalyst, when subjected to a standard n-heptadecane isomerisation test, has a selectivity of at least 70% towards isomerised products for a conversion of 95%.

**2.** A process according to claim 1, in which the bridge width is in the range 0.50 nm to 0.68 nm.

**3.** A process according to claim 1 or claim 2, in which the bridge width is in the range 0.52 nm to 0.65 nm.

**4.** A process according to any one of the preceding claims, in which the molecular sieve has a crystallite size of less than 2 m.

**5.** A process according to any one of the preceding claims, in which the molecular sieve has a crystallite size of less than 1 m.

**6.** A process according to any one of the preceding claims, in which the molecular sieve has a crystallite size of less than 0.4 m.

**7.** A process according to any one of the preceding claims, in which the molecular sieve is NU-10.

**8.** A process according to any one of claims 1 to 6, in which the molecular sieve is NU-23.

**9.** A process according to any one of claims 1 to 6, in which the molecular sieve is NU-87.

**10.** A process according to any one of claims 1 to 6, in which the molecular sieve is Theta-1.

**11.** A process according to any one of claims 1 to 6, in which the molecular sieve is EU-13.

**12.** A process according to any one of the preceding claims, in which the hydro-dehydrogenating element is selected from the group formed by group VIII metals, group VIB metals, rhenium and niobium.

**13.** A process according to any one of the preceding claims, in which the catalyst contains a matrix, and 0.5-99.9% by weight of molecular sieve (with respect to the mixture of matrix and sieve) and less than 5% by weight of hydro-dehydrogenating metal (metals) (with respect to the sieve).

14. A process according to claim 13, in which the catalyst contains 10%-90% by weight of sieve (with respect to the mixture of matrix and sieve).

15. A process according to any one of the preceding claims, in which the pressure is in the range 1 bar to 250 bars, the temperature is in the range 170C to 500C, the hourly space velocity is in the range 0.05 h$^{-1}$ to 100 h$^{-1}$, and the hydrogen concentration is in the range 50 litres to 2000 litres of hydrogen/litre of feed.

16. A process according to claim 15, in which the temperature is in the range 180-450C.

17. A process according to claim 15 or claim 16, in which the pressure is in the range 10 bars to 200 bars.

18. A process according to any one of claims 15 to 17, in which the hydrogen concentration is in the range 100 litres to 1500 litres of hydrogen/litre of feed.

19. A process according to any one of the preceding claims, in which the compound to be treated in selected from the group formed by n-alkanes, n-alkylcycloalkanes and compounds containing at least one aromatic group.

20. A process according to any one of the preceding claims, in which the compound to be treated is present in a feed with an initial boiling point of more than 175C.

21. A process according to any one of the preceding claims, in which the compound to be treated is present in a feed with an initial boiling point of at least 380C.

22. A process according to any one of the preceding claims, in which the compound to be treated comprises an n-alkane chain containing 15 to 50 carbon atoms.

23. A process according to any one of the preceding claims, in which the compound to be treated comprises an n-alkane chain containing 15 to 40 carbon atoms.

24. A process according to any one of the preceding claims, in which the compound to be treated is present in a hydrocarbon feed selected from the group formed by middle distillates, vacuum residues, hydrocracking residues, paraffins from the Fischer-Tropsch process, synthesised oils, gas oil cuts, middle distillates from FCC, lubricant stocks, and polyalphaolefins.

**Patentansprüche**

1. Verfahren zur selektiven Hydroisomerierung von Verbindungen mit wenigstens einer n-Alkankette von mehr als 10 Kohlenstoffatomen, bei dem diese zu behandelnde Verbindung mit einem Katalysator kontaktiert wird, der wenigstens ein hydrierendes-dehydrierendes Element und wenigstens ein Molekularsieb mit einem porösen mono- oder bidimensionalen Netz hat, dessen zugängliche Porenöffnungen durch 10 Sauerstoffatome begrenzt sind und der Abstand, Brückenbreite genannt, zwischen diesen Poren kleiner als 0,70 nm ist, dieses Sieb im zeolithischen Netz Atome von Bor, Eisen, Gallium und/oder Zink enthält und dieser Katalysator, der dem Standardisomerierungstest für n-Heptadekan unterzogen wurde, für eine Umwandlung von 95 % eine Selektivität an isomerierten Produkten von wenigstens 70 % aufweist.

2. Verfahren nach dem vorhergehenden Anspruch, bei dem der Brückenabstand zwischen 0,50 und 0,68 nm beträgt.

3. Verfahren nach einem der vorhergehenden Ansprüche, bei dem der Brückenabstand zwischen 0,52 und 0,65 nm beträgt.

4. Verfahren nach einem der vorhergehenden Ansprüche, bei dem das Molekularsieb eine Kristallitabmessung von weniger als 2 µm aufweist.

5. Verfahren nach einem der vorhergehenden Ansprüche, bei dem das Molekularsieb eine Kristallitabmessung von weniger als 1 µm aufweist.

6. Verfahren nach einem der vorhergehenden Ansprüche, bei dem das Molekularsieb eine Kristallitabmessung von weniger als 0,4 µm aufweist.

7. Verfahren nach einem der vorhergehenden Ansprüche, bei dem das Molekularsieb NU-10 ist.

8. Verfahren nach einem der Ansprüche 1 bis 6, bei dem das Molekularsieb NU-23 ist.

9. Verfahren nach einem der Ansprüche 1 bis 6, bei dem das Molekularsieb NU-87 ist.

10. Verfahren nach einem der Ansprüche 1 bis 6, bei dem das Molekularsieb Teta-1 ist.

11. Verfahren nach einem der Ansprüche 1 bis 6, bei dem das Molekularsieb EU-13 ist.

12. Verfahren nach einem der vorhergehenden Ansprüche, bei dem das hydrierende-dehydrierende Element aus der durch die Metalle der Gruppe VIII, die Metalle der Gruppe VI B sowie Rhenium und Niob gebildeten Gruppe gewählt ist.

13. Verfahren nach einem der vorhergehenden Ansprüche, bei dem der Katalysator eine Matrix und 0,5-99,9 Gew.-% Molekularsieb (bezogen auf das Gemisch aus Matrix und Sieb) sowie weniger als 5 Gew.-% Metall (Metalle), die hydrierend-dehydrierend (bezogen auf das Molekularsieb) sind, enthält.

14. Verfahren nach Anspruch 13, bei dem der Katalysator 10-90 Gew.-% an (Molekuarl)sieb (bezogen auf das Gemisch aus Matrix und Sieb) enthält.

15. Verfahren nach einem der vorhergehenden Ansprüche, bei dem der Druck zwischen 1 und 250 bar, die Temperatur zwischen 170 und 500°C, die stündliche Volumengeschwindigkeit zwischen 0,05 und 100 h$^{-1}$ und das Wasserstoffverhältnis zwischen 50 und 2000 Wasserstoff/l Charge beträgt.

16. Verfahren nach Anspruch 15, bei dem die Temperatur zwischen 180-450°C liegt.

17. Verfahren nach einem der Ansprüche 15 oder 16, bei dem der Druck zwischen 10-200 bar liegt.

18. Verfahren nach einem der Ansprüche 15 bis 17, bei dem das Wasserstoffverhältnis zwischen 100-1500 l Wasserstoff/l Charge beträgt.

19. Verfahren nach einem der vorhergehenden Ansprüche, bei dem die zu behandelnde Verbindung aus der durch die n-Alkane, die n-Alkylzykloalkane und die Verbindungen mit wenigstens einer aromatischen Gruppe gebildeten Gruppe gewählt ist.

20. Verfahren nach einem der vorhergehenden Ansprüche, bei dem die zu behandelnde Verbindung in einer Charge mit einem anfänglichen Siedepunkt oberhalb 175°C vorhanden ist.

21. Verfahren nach einem der vorhergehenden Ansprüche, bei dem die zu behandelnde Verbindung in einer Charge mit einem Anfangssiedepunkt von wenigstens 380°C vorhanden ist.

22. Verfahren nach einem der vorhergehenden Ansprüche, bei dem die zu behandelnde Verbindung eine n-Alkankette mit 15 bis 50 Kohlenstoffatomen umfasst.

23. Verfahren nach einem der vorhergehenden Ansprüche, bei dem die zu behandelnde Verbindung eine n-Alkankette mit 15 bis 40 Kohlenstoffatomen umfasst.

24. Verfahren nach einem der vorhergehenden Ansprüche, bei dem die zu behandelnde Verbindung in einer kohlenwasserstoffhaltigen Charge vorhanden ist, die gewählt ist aus der Gruppe, die gebildet ist durch: die mittleren Destillate, die Vakuumrückstände, die Hydrocrackrückstände, die aus dem Fischer-Tropsch-Verfahren hervorgehenden Paraffine, die Syntheseöle, die Gasölschnitte, die mittleren aus dem FCC stammenden Destillate, die Grundlagen für Öle und die Polyalphaolefine.